# EUROPÄISCHE PATENTSCHRIFT

(11) **EP 2 104 974 B1**
(45) Veröffentlichungstag und Bekanntmachung des Hinweises auf die Patenterteilung: **10.10.2018**
(21) Anmeldenummer: 07866249.1
(22) Anmeldetag: 21.12.2007
(51) Int. Cl.: H02H 3/20, H02H 3/06

(54) **SPANNUNGSSCHUTZANORDNUNG FÜR EIN ELEKTRONISCHES GERÄT**
VOLTAGE PROTECTION ARRANGEMENT FOR AN ELECTRONIC DEVICE
DISPOSITIF DE PROTECTION CONTRE LES SURTENSIONS POUR UN APPAREIL ÉLECTRONIQUE

(30) Priorität: 29.12.2006 DE 102006062554; 13.04.2007 DE 102007017858
(43) Veröffentlichungstag der Anmeldung: 30.09.2009
(73) Patentinhaber: Phoenix Contact GmbH & Co. KG, 32825 Blomberg (DE)
(72) Erfinder: LANDWEHR, Heinz-Carsten, 32657 Lemgo (DE)
(74) Vertreter: Gesthuysen, Michael
(86) Internationale Anmeldenummer: PCT/EP2007/011323
(87) Internationale Veröffentlichungsnummer: WO 2008/080576

(56) Entgegenhaltungen:
- EP-A- 0 349 750
- DE-C1- 3 425 235
- JP-A- 2002 218 645
- US-A- 5 946 270

## Beschreibung

Die Erfindung betrifft eine Spannungsschutzanordnung für ein elektronisches Gerät, beispielsweise für eine Steuerung in der Automatisierungstechnik, mit einer Abschalteinheit und einer Spannungserkennungseinheit, wobei die Abschalteinheit einen Spannungskomparator und einen mit dem Ausgang des Spannungskomparators verbundenen, zwischen dem Eingang und dem Ausgang der Abschalteinheit angeordneten, im Normalfall geschlossenen elektrischen Schalter aufweist, und wobei bei Anliegen einer unzulässigen Spannung U1 am Eingang der Abschalteinheit der elektrische Schalter geöffnet und bei anschließendem Anliegen einer zulässigen Spannung U2 der Schalter wieder geschlossen wird.

Elektronische Geräte, insbesondere Steuerungen in der Automatisierungstechnik, benötigen eine bestimmte DC-Spannungsversorgung, deren Wert nur innerhalb eines bestimmten Bereichs schwanken darf. Liegt die Versorgungsspannung außerhalb des vorgegebenen Spannungsbereichs, so kann dies zu Fehlern in dem elektronischen Gerät, beispielsweise Fehlschaltungen oder Falschmeldungen einer Steuerung, oder sogar zur Zerstörung des elektronischen Geräts führen. Eine Zerstörung des elektronischen Geräts oder von Bauteilen des elektronischen Geräts kann dabei insbesondere bei Anliegen einer Überspannung auftreten. Daher ist es aus dem Stand der Technik bekannt, empfindliche und hochwertige elektronische Geräte mit Hilfe von Überspannungsschutzanordnungen vor schädlichen Überspannungen zu schützen.

Im DC-Spannungsbereich, bei dem die Spannungsschutzanordnung der vorliegenden Erfindung primär eingesetzt wird, werden hierzu in der Praxis bisher Überspannungsschutzschaltungen bestehend aus einer Sicherung und einer Z-Diode oder einer Suppressordiode verwendet. Liegt an einer derartigen Überspannungsschutzschaltung eine Überspannung an, so führt dies zu einem Auslösen der in der Regel als Schmelzsicherung ausgebildeten Sicherung, wodurch das zu schützende elektronische Gerät von der Spannungsversorgung abgetrennt wird. Der Wert der Überspannung, bei der die Überspannungsschutzschaltung anspricht, kann durch die Wahl der geeigneten Z-Diode bzw. der Suppressordiode festgelegt werden.

Ein prinzipbedingter Nachteil einer derartigen Überspannungsschutzschaltung besteht darin, daß die Sicherung zum Schutz des nachgeschalteten elektronischen Geräts im Überspannungsfall - gewollt - zerstört wird, so daß auch nach Beseitigung der Überspannung das zu schützende elektronische Gerät von der Spannungsversorgung abgetrennt ist. Das elektronische Gerät ist erst dann wieder funktionsfähig, wenn zuvor die Überspannungsschutzschaltung repariert, d.h. die Sicherung ausgetauscht worden ist.

Aus der US 5,946,270 A ist eine eingangs beschriebene Spannungsschutzanordnung bekannt, die eine Abschalteinheit und eine Spannungsabsenkungseinrichtung aufweist, wobei die Spannungserfassungseinrichtung der Abschalteinheit vorgeschaltet ist. Der Ausgang dieser Abschalteinheit, die einen ersten Transistor und einen elektrischen Schalter aufweist, ist mit dem Eingang eines Geräts verbunden. Die Spannungserfassungseinrichtung weist vier Widerstände auf, die paarweise in Reihe geschaltet sind. Darüber hinaus weist die bekannte Spannungsschutzanordnung noch einen Transistor auf, der zwischen der Spannungserfassungseinrichtung und der Abschalteinheit angeordnet ist, funktional jedoch der Spannungserfassungseinrichtung zuzurechnen ist.

Die EP 0 349 750 A1 offenbart eine Ausgleichs- und Überspannungsschutzschaltung für elektronische Geräte, insbesondere bei einer Bremseinrichtung eines Schienenfahrzeuges. Die Schaltung weist eine parallel zum Eingang geschaltete und als Hochspannungsbegrenzer ausgebildete Eingangsstufe, einen parallel zur Eingangsstufe und dieser nachgeschalteten Spannungsteiler, einen parallel zum Spannungsteiler und diesem nachgeschalteten Komparator mit zugehöriger Speisung und zwei elektronische Schalter auf. Der erste Schalter ist dem Komparator nachgeschaltet während der zweite Schalter zwischen Eingang und Ausgang der Schutzschaltung angeordneten ist und vom ersten Schalter gesteuert wird. Bei einer unzulässigen Überspannung wird der zweite Schalter durch den ersten Schalter hochohmig geschaltet. Sobald die Eingangsspannung wieder auf einen zulässigen Pegel abfällt, wird der zweite Schalter wieder leitend, so dass der Pegel der Eingangsspannung auf den Ausgang durchgeschaltet wird.

In den vergangenen Jahren hat die Sicherheitstechnik im Maschinen- und Anlagenbau eine immer größere Bedeutung erlangt. Daraus ergeben sich zusätzliche Anforderungen an den Spannungsschutz und die Fehlersicherheit von Steuerungen und anderen sicherheitsrelevanten elektronischen Geräten. Insbesondere wird dabei gefordert, daß Maschinen und Anlagen im Fehlerfall in den sicheren Zustand überführt werden, so daß ein Risiko für Mensch oder Umwelt vermieden wird. Außerdem ist es häufig erwünscht, daß beim Auftreten eines Fehlers, beispielsweise einer Überspannung, nicht nur das zu schützende elektronische Gerät abgeschaltet wird, sondern auch eine Fehlermeldung erfolgt.

Der vorliegenden Erfindung liegt daher die Aufgabe zugrunde, eine Spannungsschutzanordnung für ein elektronisches Gerät, insbesondere für eine Steuerung in der Automatisierungstechnik zur Verfügung zu stellen, die eine größere Funktionalität aufweist und dadurch einen größeren Anwendungsbereich hat.

Diese Aufgabe ist bei der eingangs beschriebenen Spannungsschutzanordnung mit den Merkmalsen des Patentanspruchs 1 erfindungsgemäß dadurch gelöst, dass die Spannungserkennungseinheit mit dem Ausgang der Abschalteinheit verbunden ist und einen Spannungskomparator und einen mit dem Ausgang des Spannungskomparators verbundenen Schalt- bzw. Signalausgang zur Meldung einer unzulässigen Spannung aufweist, und dass die Spannungserkennungseinheit eine Teststufe aufweist, durch die die Funktion des Spannungskomparators der Spannungserkennungseinheit und des damit verbundenen Schalt- bzw. Signalausgangs ohne Beeinflussung des elektrischen Schalters testbar ist.

Die erfindungsgemäße Spannungsschutzanordnung zeichnet sich zunächst dadurch aus, daß sie funktional zumindest zwei Stufen - die Abschalteinheit und die Spannungserkennungseinheit - aufweist, wobei die Aufgabe der Abschalteinheit primär darin besteht, das zu schützende elektronische Gerät bei Auftreten einer unzulässigen Spannung abzuschalten, während die Aufgabe der Spannungserkennungseinheit primär darin besteht, beim Auftreten einer unzulässigen Spannung dieses mittels des Schalt- bzw. Signalausgang anzuzeigen.

Ein wesentlicher Vorteil der Abschalteinheit besteht dabei darin, daß die Abschaltung des zu schützenden elektronischen Geräts nicht mittels einer Sicherung sondern mittels eines elektronischen Schalters erfolgt. Dies führt zunächst dazu, daß nach Beseitigung der unzulässigen Spannung der Schalter wieder geschlossen werden kann, so daß das zu schützende elektronische Gerät wieder mit der - zulässigen - Betriebsspannung versorgt wird. Es ist somit kein Serviceeingriff beim Auftreten einer unzulässigen Spannung notwendig, da die Abschalteinheit "selbstheilend" arbeitet. Sobald der Spannungskomparator der Abschalteinheit feststellt, daß an seinem Eingang wieder eine zulässige Spannung anliegt, wird der elektrische Schalter wieder geschlossen, wodurch an dem zu schützenden elektronischen Gerät ebenfalls wieder eine zulässige Spannung anliegt. Als elektronischer Schalter kann dabei ein Transistor, insbesondere ein Feldeffekt-Transistor, oder ein Relais verwendet werden.

Dadurch, daß die erfindungsgemäße Spannungsschutzanordnung neben der Abschalteinheit auch eine Spannungserkennungseinheit aufweist, kann außerdem auch das Anliegen einer unzulässigen Spannung angezeigt werden. Über den hierzu an der Spannungserkennungseinheit ausgebildeten Schalt- bzw. Signalausgang kann dabei beim Erkennen einer unzulässigen Spannung eine Sicherheitsfunktion ausgelöst werden. Ebenso ist es jedoch auch möglich, daß über den Schalt- bzw. Signalausgang eine Meldung an eine übergeordnete Steuerung oder bei einer mehrkanaligen Architektur einer zu schützenden Steuerung eine Meldung an einen anderen Kanal der Steuerung gegeben werden kann.

Gemäß der Erfindung weist die Spannungserkennungseinheit zusätzlich eine Teststufe auf, durch die die Funktion des Spannungskomparators der Spannungserkennungseinheit und des damit verbundenen Schalt- bzw. Signalausgang getestet werden kann. Mittels der Teststufe kann dabei an einen Eingang des Spannungskomparators eine Spannung angelegt werden, dessen Wert außerhalb des zulässigen Bereichs liegt. Sind der Spannungskomparator und der Schalt- bzw. Signalausgang der Spannungserkennungseinheit in fehlerfreiem Zustand, so führt dies zu einem entsprechenden Ausgangssignal am Schalt-bzw. Signalausgang, welches von der Teststufe oder einer separaten Erkennungseinheit feststellbar ist. Bei einer bevorzugten zwei- oder mehrkanaligen Ausführung des zu schützenden elektronischen Geräts, beispielsweise einer Steuerung, wird von der CPU des zweiten Kanals sowohl die Testspannung am Spannungskomparator ausgelöst als auch das daraus resultierende Ausgangssignal am Schalt- bzw. Signalausgang ausgewertet.

Zuvor ist ausgeführt worden, daß die erfindungsgemäße Spannungsschutzanordnung zumindest zweistufig ausgebildet ist, nämlich eine Abschalteinheit und eine Spannungserkennungseinheit aufweist. Gemäß der bevorzugten Ausgestaltung weist die Spannungsschutzanordnung zusätzlich noch eine Überspannungsschutzeinheit als Grobschutz auf, die mit dem Eingang der Abschalteinheit verbunden ist, so daß die Spannungsschutzanordnung insgesamt dreistufig ausgebildet ist. Die Überspannungsschutzeinheit ist dabei so ausgebildet, daß sie erst ab einer Überspannung anspricht, die deutlich größer ist als die zulässige Versorgungsspannung des zu schützenden elektronischen Geräts und auch deutlich größer als die Überspannung, bei der der elektrische Schalter der Abschalteinheit geöffnet wird. Dies führt dazu, daß einerseits bei geringeren Überspannungen, die von der Abschalteinheit "verarbeitet" werden können, die Überspannungsschutzeinheit - gewollt - nicht anspricht, andererseits jedoch die Abschalteinheit und damit auch das zu schützende elektronische Gerät vor Zerstörung bei entesprechend großen Überspannungen geschützt ist. Insgesamt steht dadurch eine Spannungsschutzanordnung zur Verfügung, die in einen großen Spannungsbereich eingesetzt werden kann.

Die Überspannungsschutzeinheit kann einfach durch eine Sicherung und ein Überspannungsschutzelement, insbesondere eine Suppressordiode oder eine Z-Diode realisiert werden. Durch eine entsprechende Auswahl des Überspannungsschutzelements wird dabei sowohl die Überspannung festgelegt, ab der die Überspannungsschutzeinheit anspricht, als auch der Spannungsbereich festgelegt, innerhalb dessen die Abschalteinheit arbeitet. Der Fachmann wird das Überspannungsschutzelement daher so wählen, daß die Abschalteinheit im Regelfall die Auftretenden kleineren Überspannungen abschaltet, während nur bei extremen Überspannungen der Schutz der Überspannungsschutzeinheit zum tragen kommt.

Gemäß einer weiteren bevorzugten Ausgestaltung der erfindungsgemäßen Spannungsschutzanordnung ist der Spannungskomparator der Abschalteinheit so ausgebildet, daß er eine Hysterese aufweist. Der Spannungskomparator ist dabei so beschaltet, daß die Spannung U₁, bei der der elektrische Schalter öffnet, größer ist als die Spannung U₂, bei der der Schalter wieder schließt. Die Einstellung der Komparatorschwelle des Spannungskomparators kann dabei in der Praxis einfach durch einen aus Widerständen realisierten Spannungsteiler vorgenommen werden, wobei der Spannungsteiler so ausgebildet ist, daß nach dem Durchschalten des Spannungskomparators einem Ast des Spannungsteilers ein Widerstand parallel geschaltet wird, wodurch sich die Komparatorschwelle des Spannungsteilers ändert. Hierdurch wird ein Schwingen der Schaltung verhindert, so daß es nicht zu einem ständigen Öffnen und Schließen des elektronischen Schalters bei einer Überspannung kommt, die der ersten Komparatorschwelle des Spannungskomparators entspricht. Der Unterschied zwischen der Spannung U₁, bei der der elektronische Schalter öffnet, und der Spannung U₂, bei der der elektronische Schalter wieder schließt, braucht dabei nur wenige Prozent betragen.

Während mit den aus dem Stand der Technik bekannten Überspannungsschutzschaltungen, bestehend aus einer Sicherung und einer Z-Diode, nur ein Schutz des nachgeordneten elektronischen Geräts gegen Überspannung realisiert werden kann, können mit der erfindungsgemäßen Spannungsschutzanordnung auch Unterspannungen detektiert und entsprechende Maßnahmen eingeleitet werden. Hierzu weist die Abschalteinheit zwei Spannungskomparatoren auf, wobei der erste Spannungskomparator zur Feststellung einer Unterspannung und der zweite Spannungskomparator zur Feststellung einer Überspannung ausgelegt ist. Der Ausgang des ersten Spannungskomparators ist dabei mit dem Eingang des zweiten Spannungskomparators und der Ausgang des zweiten Spannungskomparators mit dem elektrischen Schalter verbunden. Dadurch ist gewährleistet, daß der elektrische Schalter nur dann geschlossen ist, und somit das zu schützende elektronische Gerät nur dann mit einer Spannung versorgt wird, wenn die Spannung innerhalb eines zulässigen Bereichs liegt. Bei Spannungen, die kleiner als die Komparatorschwelle des ersten Spannungskomparators oder größer als die Komparatorschwelle des zweiten Spannungskomparators sind, wird das zu schützende elektronische Gerät durch den elektronischen Schalter abgeschaltet. Durch die Verschaltung der beiden Spannungskomparatoren miteinander wird darüber hinaus erreicht, daß der zweite Spannungskomparator erst dann aktiv wird, wenn die am ersten Spannungskomparator anliegende Spannung größer ist als der über die Komparatorschwelle eingestellte Vergleichswert für die Unterspannung.

Ebenso wie die Abschalteinheit kann auch die Spannungserkennungseinheit zwei Spannungskomparatoren aufweisen, so daß sowohl eine Unterspannung als auch eine Überspannung detektiert und über den Schaltausgang gemeldet werden können. Darüber hinaus kann eine Spannungserkennungseinheit mit zwei Spannungskomparatoren jedoch auch dazu eingesetzt werden, zwei unterschiedliche Spannungen auf Überspannungen zu überwachen. Dies ist dann vorteilhaft, wenn das zu überwachende elektronische Gerät einen Mikroprozessor aufweist, der eine Core-Spannung benötigt, die geringer ist als die eigentliche Versorgungsspannung des elektronischen Geräts, die der Prozessor benutzt, um seine I/O-Funktionen zu bearbeiten. In diesem Fall sind die beiden Spannungskomparatoren der Spannungserkennungseinheit jedoch nicht in Reihe geschaltet, sondern unabhängig voneinander ausgebildet.

Einleitend ist ausgeführt worden, daß bei der erfindungsgemäßen Spannungsschutzanordnung die Abschalteinheit und die Spannungserkennungseinheit einen Spannungskomparator aufweisen. Grundsätzlich besteht die Möglichkeit, für die Abschalteinheit und die Spannungserkennungseinheit ein und denselben Spannungskomparator zu verwenden. Um eine Unabhängigkeit der beiden Stufen der Spannungsschutzanordnung zu erhalten, ist vorzugsweise jedoch vorgesehen, daß die Abschalteinheit und die Spannungserkennungseinheit jeweils einen eigenen Spannungskomparator bzw. eigene Spannungskomparatoren aufweisen, denen auch jeweils eine eigene Referenzspannung zur Verfügung gestellt wird. Die Referenzspannung der Spannungskomparatoren der beiden Stufen wird dabei vorzugsweise jeweils von einer Referenzspannungsdiode abgeleitet.

Im einzelnen gibt es nun eine Vielzahl von Möglichkeiten, die erfindungsgemäße Spannungsschutzanordnung auszugestalten und weiterzubilden. Dazu wird verwiesen sowohl auf die dem Patentanspruch 1 nachgeordneten Patentansprüche, als auch auf die nachfolgende Beschreibung bevorzugter Ausführungsbeispiels in der Verbindung mit der Zeichnung. In der Zeichnung zeigen
- Fig. 1: ein Blockschaltbild eines ersten Ausführungsbeispiels einer erfindungsgemäßen Spannungsschutzanordnung,
- Fig. 2: ein Blockschaltbild eines zweiten Ausführungsbeispiels einer Abschalteinheit einer erfindungsgemäßen Spannungsschutzanordnung, und
- Fig. 3: ein Blockschaltbild eines weiteren Ausführungsbeispiels einer erfindungsgemäßen Spannungsschutzanordnung.

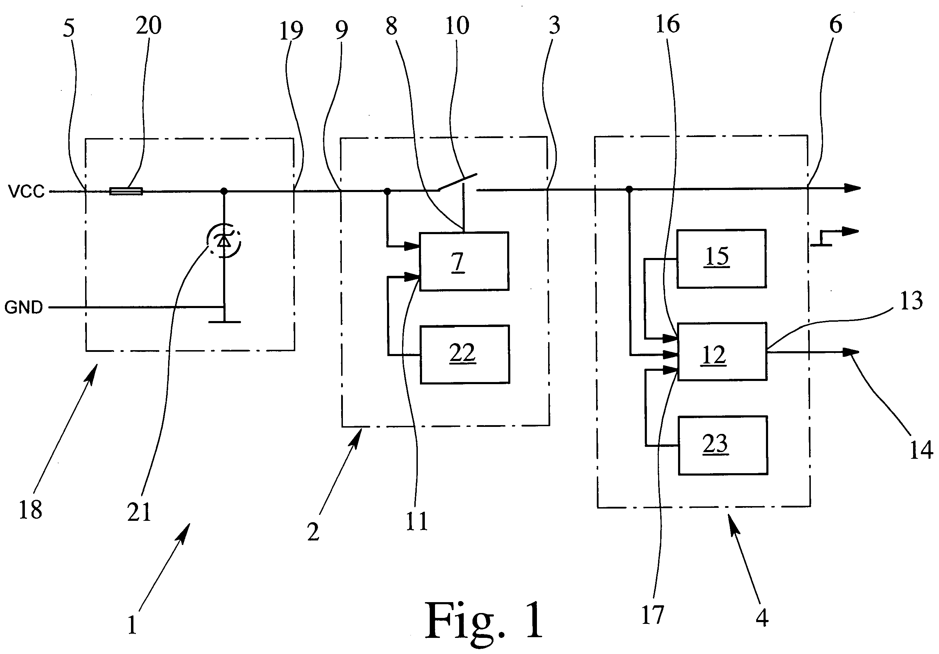

Fig. 1 zeigt ein Blockschaltbild einer erfindungsgemäßen Spannungsschutzanordnung 1, die eine Abschalteinheit 2, eine mit dem Ausgang 3 der Abschalteinheit 2 verbundene Spannungserkennungseinheit 4 und eine Überspannungsschutzeinheit 18 aufweist. Mit Hilfe der Spannungsschutzanordnung 1 wird sichergestellt, daß eine am Eingang 5 der Spannungsschutzanordnung 1 anliegende Versorgungsspannung VCC nur dann einem am Ausgang 6 der Spannungsschutzanordnung 1 angeschlossenen elektronischen Gerät zur Verfügung gestellt wird, wenn sich die Versorgungsspannung innerhalb zulässiger Grenzen befindet.

Die in Fig. 1 dargestellte Abschalteinheit 2 weist einen Spannungskomparator 7 und einen mit dem Ausgang 8 des Spannungskomparators 7 verbundenen, zwischen dem Eingang 9 und dem Ausgang 3 der Abschalteinheit 2 angeordneten elektronischen Schalter 10 auf. Der elektronische Schalter 10 ist dabei vorzugsweise als Feldeffekt-Transistor ausgebildet. Liegt die am Eingang 9 der Abschalteinheit 2 anliegende Spannung unterhalb eines am Referenzeingang 11 des Spannungskomparators 7 anstehenden Grenzwertes, so ist der Schalter 10 geschlossen, so daß dem am Ausgang 6 der Spannungsschutzanordnung 1 angeschlossenen elektronischen Gerät die - zulässige - Versorgungsspannung zur Verfügung gestellt wird.

Die Spannungserkennungseinheit 4 weist einen Spannungskomparator 12 und einen mit dem Ausgang 13 des Spannungskomparators 12 verbundenen Schalt- bzw. Signalausgang 14 zur Meldung einer unzulässigen Spannung auf. Darüber hinaus ist die Spannungserkennungseinheit 4 noch mit einer Teststufe 15 versehen, durch die die Funktion des Spannungskomparators 12 und des damit verbundenen Schalt- bzw. Signalausgangs 14 getestet werden kann. Hierzu kann von der Teststufe 15 an einen Eingang 16 des Spannungskomparators 12 eine Überspannung angelegt werden, die größer als die am Referenzeingang 17 des Spannungskomparators 12 anliegende Referenzspannung ist. Dadurch wird bei fehlerfrei arbeitendem Spannungskomparator 12 am Schalt- bzw. Signalausgang 14 ein die Überspannung anzeigendes Schaltsignal erzeugt, durch dessen Auswertung festgestellt werden kann, ob der Spannungskomparator 12 und der Schalt- bzw. Signalausgang 14 ordnungsgemäß funktionieren.

Wie eingangs bereits ausgeführt worden ist, weist die Spannungsschutzanordnung 1 neben der Abschalteinheit 2 und der Spannungserkennungseinheit 4 noch eine Überspannungsschutzeinheit 18 auf, deren Ausgang 19 mit dem Eingang 9 der Abschalteinheit 2 verbunden ist. Der Eingang der als Grobschutz dienenden Überspannungsschutzeinheit 18 bildet gleichzeitig den Eingang 5 der Spannungsschutzanordnung 1. Bei dem in Fig. 1 dargestellten Ausführungsbeispiel weist die Überspannungsschutzeinheit 18 eine Sicherung 20 und eine Suppressordiode 21 als Überspannungsschutzelement auf. Wird als Überspannungsschutzelement eine unidirektionale Suppressordiode oder eine Z-Diode verwendet, so dient die Überspannungsschutzeinheit 18 gleichzeitig auch als Verpolungsschutz für die Spannungsschutzanordnung 1 und damit auch für das zu schützende elektronische Gerät.

Die am Referenzeingang 11 des Spannungskomparators 7 anliegende Referenzspannung wird vorzugsweise von einer Referenzspannungsdiode 22 abgeleitet. Entsprechend dient zur Erzeugung der Referenzspannung am Referenzeingang 17 des Spannungskomparators 12 eine Referenzspannungsdiode 23. Grundsätzlich kann jedoch auch nur eine Referenzspannungsdiode sowohl für den Spannungskomparator 7 der Abschalteinheit 2 als auch für den Spannungskomparator 12 der Spannungserkennungseinheit 4 verwendet werden.

Ein wesentlicher Vorteil der erfindungsgemäßen Spannungsschutzanordnung 1 besteht darin, daß die Abschaltung eines zu schützenden elektronischen Geräts beim Anliegen einer unzulässigen Spannung durch den elektronischen Schalter 10 erfolgt, solange die Spannung kleiner ist als die Ansprechspannung der Überspannungsschutzeinheit 18. Durch die Betätigung des elektronischen Schalters 10 über den Spannungskomparator 7 wird nämlich gewährleistet, daß nach Beseitigung der unzulässigen Spannung der elektrische Schalter 10 wieder geschlossen wird, so daß das elektronische Gerät - ohne daß es hierzu eines Serviceeingriffes bedarf - wieder an der Versorgungsspannung anliegt. Außerdem ist durch die Ausbildung der Spannungserkennungseinheit 4 sowohl eine Meldung einer unzulässigen Spannung über den Schalt- bzw. Signalausgang 14 als auch ein Funktionstest der Spannungsschutzanordnung 1 während des Betriebes möglich, da der Funktionstest ohne Beeinflussung des elektronischen Schalters 10 erfolgen kann.

Wird die erfindungsgemäße Spannungsschutzanordnung 1 zum Schutz einer Steuerung in der Automatisierungstechnik verwendet, so können die einzelnen Einheiten bzw. Bauteile nachfolgende Werte aufweisen, wenn die Versorgungsspannung der Steuerung beispielsweise 3,4 V (± 5 %) beträgt. Zum Schutz einer derartigen Steuerung weist die Überspannungsschutzeinheit 18 eine 6,7 V Suppressordiode 21 auf. Die Spannung U₁, bei der der Spannungskomparator 7 den Schalter 10 öffnet beträgt 3,835 V, wobei der Spannungskomparator 7 so geschaltet ist, daß er den Schalter 10 erst bei einer Spannung U₂ kleiner 3,75 V wieder schließt. Durch die Realisierung einer derartigen Hysterese wird ein Schwingen der Schaltung und damit ein ständiges Öffnen und Schließen des Schalters 10 verhindert.

Selbstverständlich kann die erfindungsgemäße Spannungsschutzanordnung 1 auch zum Schutz anderer elektronischer Geräte, die eine andere Versorgungsspannung aufweisen, eingesetzt werden. Beispielsweise kann bei einem elektronischen Gerät der Automatisierungstechnik die Versorgungsspannung 24 V betragen. In einem solchen Anwendungsfall kann die als Grobschutz wirkende Überspannungsschutzeinheit 18 beispielsweise so ausgebildet sein, daß sie erst bei einer Spannung deutlich größer als 30 V anspricht, während die Spannung U₁ der Abschalteinheit 2 etwa bei 30 V liegt.

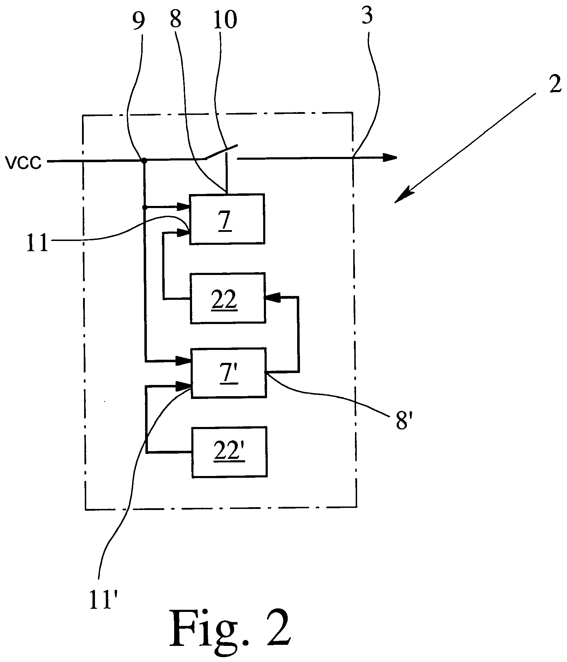

Fig. 2 zeigt eine alternative Ausgestaltung der Abschalteinheit 2 einer Spannungsschutzanordnung 1. Der Ausgang 3 der Abschalteinheit 2 ist - wie bei dem Ausführungsbeispiel gemäß Fig. 1 - mit der Spannungserkennungseinheit 4 verbunden. Darüber hinaus kann der Eingang 9 der Abschalteinheit 2 auch mit dem Ausgang 19 einer Überspannungsschutzeinheit 18 verbunden sein. Im Unterschied zum Ausführungsbeispiel gemäß Fig. 1 weist die in Fig. 2 dargestellte Abschalteinheit 2 zwei Spannungskomparatoren 7, 7' auf, wobei der erste Spannungskomparator 7' die Versorgungsspannung VCC auf Unterspannung und der zweite Spannungskomparator 7 die Versorgungsspannung VCC auf Überspannung überwacht.

Über die Referenzspannungsdiode 22' - oder einen alternativ verwendeten Spannungsteiler - wird der Vergleichswert für die Unterspannung und über die Referenzspannungsdiode 22 - oder einen alternativ verwendeten zweiten Spannungsteiler - der Vergleichswert für die Überspannung eingestellt. Die Referenzspannungsdiode 22 bzw. ein alternativ eingesetzter zweiter Spannungsteiler ist dabei erst dann aktiv, wenn die Versorgungsspannung VCC größer als der eingestellte Vergleichswert der Unterspannung ist. Hierzu ist der Ausgang 8' des ersten Spannungskomparators 7' - über die Referenzspannungsdiode 22 - mit dem Referenzeingang 11 des zweiten Spannungskomparators 7 und der Ausgang 8 des zweiten Spannungskomparators 7 mit dem elektrischen Schalter 10 verbunden.

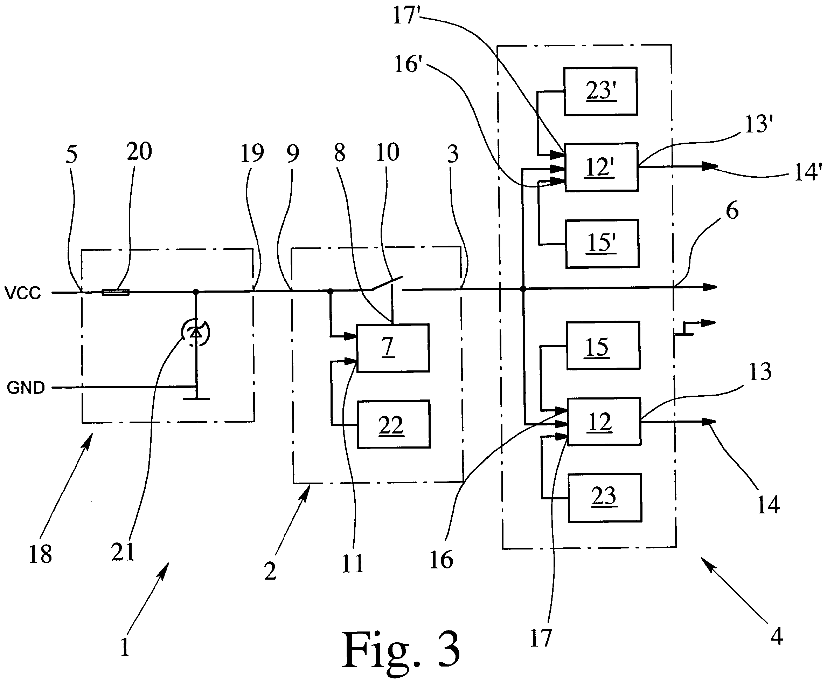

Fig. 3 zeigt eine weitere Ausgestaltung einer Spannungsschutzanordnung 1, die sich von der Spannungsschutzanordnung 1 gemäß Fig. 1 nur durch eine alternative Ausgestaltung der Spannungserkennungseinheit 4 unterscheidet. Hierbei weist die Spannungserkennungseinheit 4 zwei Spannungskomparatoren 12, 12' aufweist, mit denen zwei unterschiedliche Spannungen auf Überspannungen überwacht werden können. Dabei weist der Ausgang 13' des Spannungskomparators 12' ebenso wie der Ausgang 13 des Spannungskomparators 12 einen Schalt- bzw. Signalausgang 14' zur Meldung einer unzulässigen Spannung auf, wobei die beiden Schalt- bzw. Signalausgänge 14, 14' auch miteinander verbunden werden können.

Zur Testung des Spannungskomparators 12' ist auch dieser mit einer Teststufe 15' verbunden, mittels der an den Eingang 16' des Spannungskomparators 12' eine Überspannung angelegt werden, die größer als die am Referenzeingang 17' des Spannungskomparators 12' anliegende Referenzspannung ist. Zur Erzeugung der Referenzspannung am Referenzeingang 17' des Spannungskomparators 12' ist eine Referenzspannungsdiode 23' vorgesehen.

Selbstverständlich kann bei der in Fig. 3 gezeigten Spannungsschutzanordnung 1 anstelle der dargestellten Abschalteinheit 2 mit nur einem Spannungskomparator 7 auch eine Abschalteinheit 2 gemäß Fig. 2 mit zwei Spannungskomparatoren 7, 7' eingesetzt werden. Darüber hinaus kann bei einer zweikanaligen Ausführung des zu schützenden elektronischen Geräts, beispielsweise einer Steuerung, von der CPU des zweiten Kanals sowohl die Testspannung an den Spannungskomparatoren 12, 12' ausgelöst als auch das daraus resultierende Ausgangssignal am Schalt- bzw. Signalausgang 14, 14' ausgewertet, so daß in diesem Fall eine separat ausgebildete Teststufe entfallen kann.

## Patentansprüche

1. Spannungsschutzanordnung für ein elektronisches Gerät, beispielsweise für eine Steuerung in der Automatisierungstechnik, mit einer Abschalteinheit (2) und einer Spannungserkennungseinheit (4),
wobei die Abschalteinheit (2) einen Spannungskomparator (7) und einen mit dem Ausgang (8) des Spannungskomparators (7) verbundenen, zwischen dem Eingang (9) und dem Ausgang (3) der Abschalteinheit (2) angeordneten, im Normalfall geschlossenen elektrischen Schalter (10) aufweist, und
wobei bei Anliegen einer unzulässigen Spannung U₁ am Eingang (9) der Abschalteinheit (2) der elektrische Schalter (10) geöffnet und bei anschließendem Anliegen einer zulässigen Spannung U₂ der Schalter (10) wieder geschlossen wird,
**dadurch gekennzeichnet,**
**dass** die Spannungserkennungseinheit (4) mit dem Ausgang (3) der Abschalteinheit (2) verbunden ist und einen Spannungskomparator (12) und einen mit dem Ausgang (13) des Spannungskomparators (12) verbundenen Schalt- bzw. Signalausgang (14) zur Meldung einer unzulässigen Spannung aufweist, und
**dass** die Spannungserkennungseinheit (4) eine Teststufe (15) aufweist, durch die die Funktion des Spannungskomparators (12) der Spannungserkennungseinheit (4) und des damit verbundenen Schalt- bzw. Signalausgangs (14) ohne Beeinflussung des elektrischen Schalters (10) testbar ist.

2. Spannungsschutzanordnung nach Anspruch 1, **dadurch gekennzeichnet, dass** eine Überspannungsschutzeinheit (18) als Grobschutz vorgesehen ist, deren Ausgang (19) mit dem Eingang (9) der Abschalteinheit (2) verbunden ist.

3. Spannungsschutzanordnung nach Anspruch 1, **dadurch gekennzeichnet, dass** die Überspannungsschutzeinheit (18) eine Sicherung (20) und ein Überspannungsschutzelement, insbesondere eine Suppressordiode (21) aufweist.

4. Spannungsschutzanordnung nach einem der Ansprüche 1 bis 3, **dadurch gekennzeichnet, dass** der Spannungskomparator (7) der Abschalteinheit (2) eine Hysterese aufweist, wobei die Spannung U₁, bei der der elektrische Schalter (10) öffnet, größer ist als die Spannung U₂, bei der der Schalter (10) wieder schließt.

5. Spannungsschutzanordnung nach einem der Ansprüche 1 bis 4, **dadurch gekennzeichnet, dass** die Abschalteinheit (2) zwei Spannungskomparatoren (7, 7') aufweist, wobei der erste Spannungskomparator (7') zur Feststellung einer ersten Grenzspannung, beispielsweise einer Unterspannung, und der zweite Spannungskomparator (7) zur Feststellung einer zweiten Grenzspannung, beispielsweise einer Überspannung, ausgelegt ist.

6. Spannungsschutzanordnung nach Anspruch 5, **dadurch gekennzeichnet, dass** der Ausgang (8') des ersten Spannungskomparators (7') mit einem Eingang (11) des zweiten Spannungskomparators (7) und der Ausgang (8) des zweiten Spannungskomparators (7) mit dem elektrischen Schalter (10) verbunden ist.

7. Spannungsschutzanordnung nach einem der Ansprüche 1 bis 6, **dadurch gekennzeichnet, dass** die Spannungserkennungseinheit (4) zwei Spannungskomparatoren (12, 12') aufweist, mit denen zwei unterschiedliche Spannungen auf Überspannungen überwacht werden.

8. Spannungsschutzanordnung nach einem der Ansprüche 1 bis 7, **dadurch gekennzeichnet, dass** der elektrische Schalter (10) der Spannungserkennungseinheit (4) als Transistor, insbesondere als Feldeffekttransistor, oder als Relais ausgebildet ist.

9. Spannungsschutzanordnung nach einem der Ansprüche 1 bis 8, **dadurch gekennzeichnet, dass** die Referenzspannung der Spannungskomparatoren (7) der Abschalteinheit (2) und die Referenzspannung des Spannungskomparators (12) der Spannungserkennungseinheit (4) jeweils von einer Referenzspannungsdiode (22, 23) abgeleitet wird.

10. Spannungsschutzanordnung nach einem der Ansprüche 1 bis 9, **dadurch gekennzeichnet, dass** die Spannungsschutzanordnung mindestens zweikanalig ausgeführt ist, wobei beide Kanälen zumindest eine Abschalteinheit (2) und eine mit dem Ausgang (3) der Abschalteinheit (2) verbundenen Spannungserkennungseinheit (4) aufweisen.

11. Spannungsschutzanordnung nach Anspruch 10, **dadurch gekennzeichnet, dass** von einer CPU des einen Kanals sowohl eine Testspannung am Spannungskomparator (12) des anderen Kanals ausgelöst als auch das daraus resultierende Ausgangssignal am Schalt- bzw. Signalausgangs (14) des anderen Kanals ausgewertet wird.

## Claims

1. Voltage protection arrangement for an electronic device, for example for a control in automation engineering, comprising a shutoff unit (2) and a voltage detection unit (4),
wherein the shutoff unit (2) has a voltage comparator (7) and an electric switch (10), which closed in a normal case, the electric switch being located between the input (9) and the output (3) of the shutoff unit (2), and being connected to the output (8) of the voltage comparator (7), and
wherein, when an impemissable voltage U₁ is present to the input (9) of the shutoff unit (2), the electrical switch (10) is opened and, when an allowable voltage U₂ is subsequently present, the switch (10) is reclosed,
**characterized in,**
**that** the voltage detection unit (4) is connected to the output (3) of the shutoff unit (2) and has a voltage comparator (12) and a switching or signal output (14) connected to the output (13) of the voltage comparator (12) for reporting an unallowable voltage, and
**that** the voltage detection unit (4) has a test stage (15) with which the functioning of the voltage comparator (12) of the voltage detection unit (4) and of the switching or signal output (14) can be tested without influencing the electronic switch (10).

2. Voltage protection arrangement according to claim 1, **characterized in that** an overvoltage protection unit (18) is provided as coarse protection having an output (19) that is connected to the input (9) of the shutoff unit (2).

3. Voltage protection arrangement according to claim 1, **characterized in that** the overvoltage protection unit (18) has a fuse (20) and an overvoltage protection element, in particular a suppressor diode (21).

4. Voltage protection arrangement according to any one of claims 1 to 3, **characterized in that** the voltage comparator (7) of the shutoff unit (2) has hysteresis, wherein the voltage U₁ at which the electric switch (10) opens is greater than the voltage U₂ at which the switch (10) recloses.

5. Voltage protection arrangement according to any one of claims 1 to 4, **characterized in that** the shutoff unit (2) has two voltage comparators (7, 7'), wherein the first voltage comparator (7') is designed to ascertain a first threshold voltage, for example an undervoltage, and the second voltage comparator (7) is designed to ascertain a second threshold voltage, for example an overvoltage.

6. Voltage protection arrangement according to claim 5, **characterized in that** the output (8') of the first threshold voltage comparator (7') is connected to the input (11) of the second threshold voltage comparator (7) and the output (8) of the second threshold voltage comparator (7) is connected to the electric switch (10).

7. Voltage protection arrangement according to any one of claims 1 to 6, **characterized in that** the voltage detection unit (4) has two voltage comparators (12, 12'), each of which being adapted to monitor a respective one of two different voltages.

8. Voltage protection arrangement according to any one of claims 1 to 7, **characterized in that** the electric switch (10) of the voltage detection unit (4) is designed as a transistor, in particular as a field effect transistor, or as a relay.

9. Voltage protection arrangement according to any one of claims 1 to 8, **characterized in that** the reference voltage of the voltage comparators (7) of the shutoff unit (2) and the reference voltage of the voltage comparator (12) of the voltage detection unit (4) are derived from a respective reference voltage diode (22, 23).

10. Voltage protection arrangement according to any one of claims 1 to 9, **characterized in that** the voltage protection arrangement has at least two channels, wherein both channels have at least one shutoff unit (2) and a voltage detection unit (4) which is connected to the output (3) of the shutoff unit (2).

11. Voltage protection arrangement according to claim 10, **characterized in that** a CPU of one of the channels both triggers a test voltage on the voltage comparator (12) of the other channel and evaluates the output signal resulting from it on the switching or signal output (14) of the other channel.

## Revendications

1. Dispositif de protection contre les surtensions pour un appareil électronique, par exemple pour une commande en technique d'automatisation, comportant une unité de coupure (2) et une unité de reconnaissance de tension (4),
dans lequel l'unité de coupure (2) comporte un comparateur de tension (7) et un interrupteur électrique (10) normalement fermé, relié à la sortie (8) du comparateur de tension (7) et disposé entre l'entrée (9) et la sortie (3) de l'unité de coupure (2), et
dans lequel, lorsqu'une tension non admissible U₁ est appliquée à l'entrée (9) de l'unité de coupure (2), l'interrupteur électrique (10) est ouvert et lorsqu'une tension admissible U₂ est ensuite appliquée, l'interrupteur (10) est à nouveau fermé,
**caractérisé**
**en ce que** l'unité de reconnaissance de tension (4) est reliée à la sortie (3) de l'unité de coupure (2) et comporte un comparateur de tension (12) et une sortie de commutation ou de signal (14) reliée à la sortie (13) du comparateur de tension (12) pour signaler une tension non admissible, et
**en ce que** l'unité de reconnaissance de tension (4) comporte un étage de test (15) au moyen duquel le fonctionnement du comparateur de tension (12) de l'unité de reconnaissance de tension (4) et de la sortie de commutation ou de signal (14) qui lui est reliée peut être testé sans influencer l'interrupteur électrique (10).

2. Dispositif de protection contre les surtensions selon la revendication 1, **caractérisé en ce qu'**il est prévu en tant que protection grossière une unité de protection contre les surtensions (18) dont la sortie (19) est reliée à l'entrée (9) de l'unité de coupure (2).

3. Dispositif de protection contre les surtensions selon la revendication 1, **caractérisé en ce que** l'unité de protection contre les surtensions (18) comporte un fusible (20) et un élément de protection contre les surtensions, en particulier une diode de suppression (21).

4. Dispositif de protection contre les surtensions selon l'une des revendications 1 à 3, **caractérisé en ce que** le comparateur de tension (7) de l'unité de coupure (2) présente une hystérésis conformément à laquelle la tension U₁ à laquelle l'interrupteur électrique (10) s'ouvre est supérieure à la tension U₂ à laquelle l'interrupteur (10) se ferme à nouveau.

5. Dispositif de protection contre les surtensions selon l'une des revendications 1 à 4, **caractérisé en ce que** l'unité de coupure (2) comporte deux comparateurs de tension (7, 7'), dans lequel le premier comparateur de tension (7') est conçu pour détecter une première tension limite, par exemple une sous-tension, et dans lequel le second comparateur de tension (7) est conçu pour détecter une seconde tension limite, par exemple une surtension.

6. Dispositif de protection contre les surtensions selon la revendication 5, **caractérisé en ce que** la sortie (8') du premier comparateur de tension (7') est reliée à une entrée (11) du second comparateur de tension (7) et **en ce que** la sortie (8) du second comparateur de tension (7) est reliée à l'interrupteur électrique (10).

7. Dispositif de protection contre les surtensions selon l'une des revendications 1 à 6, **caractérisé en ce que** l'unité de reconnaissance de tension (4) comporte deux comparateurs de tension (12, 12') au moyen desquels deux tensions différentes sont surveillées pour détecter des surtensions.

8. Dispositif de protection contre les surtensions selon l'une des revendications 1 à 7, **caractérisé en ce que** l'interrupteur électrique (10) de l'unité de reconnaissance de tension (4) est réalisé sous la forme d'un transistor, en particulier d'un transistor à effet de champ, ou d'un relais.

9. Dispositif de protection contre les surtensions selon l'une des revendications 1 à 8, **caractérisé en ce que** la tension de référence des comparateurs de tension (7) de l'unité de coupure (2) et la tension de référence du comparateur de tension (12) de l'unité de reconnaissance de tension (4) sont respectivement dérivées d'une diode de tension de référence (22, 23).

10. Dispositif de protection contre les surtensions selon l'une des revendications 1 à 9, **caractérisé en ce que** le dispositif de protection contre les surtensions est réalisé sous une forme comprenant au moins deux canaux, dans lequel les deux canaux comportent au moins une unité de coupure (2) et une unité de reconnaissance de tension (4) reliée à la sortie (3) de l'unité de coupure (2).

11. Dispositif de protection contre les surtensions selon la revendication 10, **caractérisé en ce qu'**une tension de test est déclenchée par une CPU de l'un des canaux au niveau du comparateur de tension (12) de l'autre canal et **en ce que** le signal de sortie qui en résulte est analysé à la sortie de commutation ou de signal (14) de l'autre canal.
